# EUROPEAN PATENT APPLICATION

(11) **EP 3 428 840 A1**
(43) Date of publication of application: **16.01.2019**
(21) Application number: 18176853.2
(22) Date of filing: 08.06.2018
(51) Int. Cl.: G06K 9/00, G06K 9/62

(54) **COMPUTER IMPLEMENTED DETECTING METHOD, COMPUTER IMPLEMENTED LEARNING METHOD, DETECTING APPARATUS, LEARNING APPARATUS, DETECTING SYSTEM, AND RECORDING MEDIUM**

(30) Priority: 11.07.2017 JP 2017135135
(71) Applicant: Panasonic Intellectual Property Corporation of America, Torrance, CA 90503 (US)
(72) Inventor: TANIGAWA, Toru, Osaka, 540-6207 (JP); SHODA, Yukie, Osaka, 540-6207 (JP); IMOMOTO, Seiya, Osaka, 540-6207 (JP)
(74) Representative: Eisenführ Speiser

(57) **Abstract**

An adherent detecting method for, by means of at least one computer, detecting a target adherent adhering to a translucent body that separates an imaging element and a photographing target from each other includes acquiring a photographed image that is generated by photographing via the translucent body with the imaging element. Next, the photographed image is inputted as input data into a recognition model for recognizing the presence or absence of an adherent to the translucent body in an image taken via the translucent body. Then, the presence or absence of the target adherent in the photographed image is detected by acquiring information outputted from the recognition model and indicating the presence or absence of an adherent in the photographed image.

## Description

### BACKGROUND

### 1. Technical Field

The present disclosure relates to a computer implemented detecting method, a computer implemented learning method, a detecting apparatus, a learning apparatus, a detecting system, and a recording medium.

### 2. Description of the Related Art

Automotive drive assist technologies and automatic vehicle-control technologies are being developed. With these technologies, control pertaining to the running of a vehicle is exercised by recognizing an object located around the vehicle. The object located around the vehicle is obtained by photographing with an onboard camera.

An adherent, such as a drop of water, adhering to a lens of a camera causes a disturbance in a photographed image by reflecting or refracting light. Japanese Patent No. 4967015 discloses a technology that makes it possible, with use of an image taken in lighting and an image taken without lighting, to recognize an object even in a case where there is an adherent such as a raindrop within the field of view of a camera.

### SUMMARY

However, the technology disclosed in Japanese Patent No. 4967015 gives no consideration to deterioration in accuracy of recognition of an object in the case of a halo, a distortion, or a break in a part of a photographed image due to an adherent. That is, the technology disclosed in Japanese Patent No. 4967015 is undesirably incapable of overcoming deterioration in accuracy of recognition of an object in the case of a halo, a distortion, or a break in a part of a photographed image due to an adherent.

One non-limiting and exemplary embodiment provides an adherent detecting method that makes it possible to more highly accurately detect an adherent shown in a photographed image.

In one general aspect, the techniques disclosed here feature an adherent detecting method for, by means of at least one computer, detecting a target adherent adhering to a translucent body that separates an imaging element and a photographing target from each other, including: acquiring a photographed image that is generated by photographing via the translucent body with the imaging element; and detecting the presence or absence of the target adherent in the photographed image by acquiring information indicating the presence or absence of an adherent in the photographed image, the information being outputted by inputting the photographed image as input data into a recognition model for recognizing the presence or absence of an adherent to the translucent body in an image taken via the translucent body.

The adherent detecting method according to the aspect of the present disclosure makes it possible to more highly accurately detect an adherent shown in a photographed image.

It should be noted that general or specific embodiments may be implemented as a system, a method, an integrated circuit, a computer program, a computer-readable storage medium such as a CD-ROM, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a diagram showing a configuration of an adherent detecting system according to an embodiment;
Fig. 2 is a block diagram showing a functional configuration of a server according to the embodiment;
Fig. 3 is an explanatory diagram showing an example of an image that is stored in an image storage according to the embodiment;
Fig. 4 is an explanatory diagram showing training data according to the embodiment;
Fig. 5 is an explanatory diagram showing annotations that are added by an annotation adder according to the embodiment;
Fig. 6 is a block diagram showing a functional configuration of a vehicle according to the embodiment;
Fig. 7 is a flow chart showing a process that is performed by the server according to the embodiment;
Fig. 8 is a flow chart showing a process that is performed by onboard equipment according to the embodiment;
Figs. 9A and 9B are explanatory diagrams showing a first example of annotations that are added by an annotation adder according to Modification 1 of the embodiment;
Figs. 10A and 10B are explanatory diagrams showing a second example of annotations that are added by the annotation adder according to Modification 1 of the embodiment;
Fig. 11 is an explanatory diagram showing annotations that are added by an annotation adder according to Modification 2 of the embodiment;
Fig. 12 is a flow chart showing an adherent learning method according to a modification of each of the embodiments;
Fig. 13 is a block diagram showing an adherent learning apparatus according to a modification of each of the embodiments;
Fig. 14 is a flow chart showing an adherent detecting method according to a modification of each of the embodiments;
Fig. 15 is a block diagram showing an adherent detecting apparatus according to a modification of each of the embodiments;
Fig. 16 is a flow chart showing an adherent detecting method according to a modification of each of the embodiments; and
Fig. 17 is a block diagram showing an adherent detecting system according to a modification of each of the embodiments.

### DETAILED DESCRIPTION

An adherent detecting method according to an aspect of the present disclosure is an adherent detecting method for, by means of at least one computer, detecting a target adherent adhering to a translucent body that separates an imaging element and a photographing target from each other, including: acquiring a photographed image that is generated by photographing via the translucent body with the imaging element; and detecting the presence or absence of the target adherent in the photographed image by acquiring information indicating the presence or absence of an adherent in the photographed image, the information being outputted by inputting the photographed image as input data into a recognition model for recognizing the presence or absence of an adherent to the translucent body in an image taken via the translucent body.

According to the foregoing aspect, the presence or absence of a target adherent in a photographed image is detected on the basis of a recognition model. Since this recognition model allows recognition of an adherent in an image in which the adherent is shown to be adhering to a translucent body, inputting the photographed image into this recognition model makes it possible to more highly accurately detect the presence or absence of a target adherent in the photographed image. Thus, this adherent detecting method makes it possible to more highly accurately detect an adherent in a photographed image that is adhering to a translucent body.

For example, the recognition model may be one constructed by learning the presence or absence of the adherent in the photographed image with use of training data obtained by adding annotations to the photographed image, the annotations being information indicating the presence of absence of an adherent to the translucent body.

According to the foregoing aspect, a recognition model constructed with use of training data to which annotations have been added, i.e. a recognition model constructed by learning the presence or absence of an adherent in an image in which the adherent is shown, is used. That is, the presence or absence of the adherent shown in the image is taught into the recognition model. For example, the type of an adherent is learned on the basis of the features, such as color, shape, or pattern, of the adherent shown in an image. Therefore, by inputting a photographed image into the recognition model, the presence or absence of an adherent in the photographed image thus inputted is appropriately detected. This may contribute to more highly accurate detection of a target adherent.

For example, the training data may be the training data to which the annotations have been added, the annotation further including (a) coordinates of the adherent in the photographed image and (b) type information indicating a type of the adherent. The recognition model may be one constructed by further learning the type information of the adherent in the photographed image with use of the training data. In detecting the target adherent, a type of the target adherent in the photographed image may be further detected by acquiring the type information of the adherent in the photographed image as outputted by inputting the photographed image as input data into the recognition model.

According to the foregoing aspect, a recognition model constructed by further learning the type and position of an adherent in an image in which the adherent is shown is used. That is, the position and type of the adherent shown in the image is further taught into the recognition model. Therefore, by inputting a photographed image into the recognition model, the type of an adherent in the photographed image thus inputted is appropriately detected. This may contribute to more highly accurate detection of a target adherent.

For example, in detecting the target adherent, the dimensions of the target adherent in the photographed image may be detected by acquiring the dimensions of an adherent in the photographed image as outputted by inputting the photographed image into the recognition model.

According to the foregoing aspect, the amount of an target adherent can be more highly accurately detected.

For example, the imaging element may be situated on board a target vehicle. The translucent body may include two translucent bodies that are a lens of a camera including the imaging element and a windshield of the target vehicle. In acquiring the training data, the training data to which the annotations have been added may be acquired, the annotations including (c) specific information indicating that one of the lens and the windshield to which the adherent is adhering. The recognition model may be one constructed by further learning the specific information of the adherent in the image. In detecting the target adherent, which of the lens and the windshield the target adherent in the photographed image is adhering to may be detected by acquiring specific information of an adherent in the photographed image as outputted by inputting the photographed image as input data into the recognition model.

According to the foregoing aspect, a target adherent in a photographed image is detected on the basis of a recognition model constructed by learning further according to which of the two translucent bodies an adherent is adhering to. Since specific information indicating which of the two translucent bodies an adherent is adhering to has been further added, this recognition model is one constructed by learning which of the translucent bodies an adherent is adhering to. That is, in addition to the type of an adherent shown in an image, which of the translucent bodies the adherent is adhering to is taught into the recognition model. Therefore, by inputting a photographed image into the recognition model, the type of an adherent in the photographed image thus inputted and the translucent body to which the adherent is adhering are appropriately detected. This may contribute to more highly accurate detection of a target adherent.

For example, the type information included in the annotations may be information indicating a drop of water, a grain of snow, ice, dust, mud, an insect, or droppings.

According to the foregoing aspect, more specifically, a drop of water, a grain of snow, ice, dust, mud, an insect, and droppings are detected as target adherents adhering to a translucent body.

For example, the imaging element may be situated on board a target vehicle, and the computer implemented detecting method may further include controlling notification to a driver of the target vehicle according to a type of the target adherent thus detected.

According to the foregoing aspect, the driver is notified according to the type of an adherent detected. When notified, the driver can take an action according to the type of the adherent. For example, when the adherent is a drop of water or a grain of snow, the driver can turn on the wiper, and when the adherent is mud or an insect, the drive can respond, for example, by pulling over and wiping away the adherent with cloth.

For example, the imaging element may be situated on board a target vehicle, and the computer implemented detecting method may further include switching, according to a type of the target adherent thus detected, between controlling the target vehicle by automated driving and controlling the target vehicle by manual driving.

According to the foregoing aspect, the vehicle is controlled according to the type of an adherent detected. According to the type of the adherent, it becomes possible to exercise the control, for example, of canceling automated driving and switching to manual driving in a case where it is impossible to continue automated driving or a safety hazard occurs.

For example, the imaging element may be situated on board a target vehicle, and the computer implemented detecting method may further include controlling drive of a wiper of the target vehicle according to a type of the target adherent thus detected.

According to the foregoing aspect, the wiper is controlled according to the type of an adherent detected. For example, the control of turning on the wiper becomes possible only in a case where the adherent is a drop of water or a grain of snow.

For example, the recognition model may include a rainy weather recognition model for recognizing the adherent in the photographed image taken in rainy weather and type information indicating a type of the adherent, and after a drop of water has been detected as the target adherent, the target adherent may be detected by using the rainy weather recognition model as the recognition model.

According to the foregoing aspect, there is an advantage that an adherent is more accurately recognized in rainy weather. Since the rainy weather recognition model is one constructed from a training image taken in rainy weather, an adherent in an image taken by the camera in rainy weather can be more highly accurately detected.

For example, the recognition model may be a neural network.

According to the foregoing aspect, more specifically, an adherent adhering to a translucent body can be more highly accurately detected by using a neural network model as a recognition model.

Further, an adherent learning method according to an aspect of the present disclosure is an adherent learning method for, by means of at least one computer, detecting a target adherent adhering to a translucent body that separates an imaging element and a photographing target from each other, including: acquiring training data obtained by adding annotations to a photographed image that is generated by photographing via the translucent body, the annotations being information indicating the presence or absence of an adherent to the translucent body; and constructing a recognition model by learning the presence or absence of the adherent in the photographed image with use of the training data thus acquired.

According to the foregoing aspect, with use of training data to which annotations have been added, a recognition model is constructed by learning the presence or absence of an adherent in an image in which the adherent is shown. That is, a recognition model into which the presence or absence of an adherent shown in an image has been taught is constructed. Accordingly, use of this recognition model makes it possible to more highly accurately detect a target adherent shown in a photographed image.

For example, in constructing the recognition model, the recognition model may be constructed by learning type information of the adherent in the photographed image with use of the training data obtained by adding, to the photographed image taken via the translucent body, the annotation including (a) coordinates of the adherent in the photographed image and (b) the type information indicating a type of the adherent.

According to the foregoing aspect, with use of training data to which annotations have been added, a recognition model is constructed by learning the type of an adherent in an image in which the adherent is shown. That is, a recognition model into which the type of an adherent shown in an image has been taught is constructed. Accordingly, use of this recognition model makes it possible to more highly accurately detect a target adherent shown in a photographed image.

For example, the imaging element may be situated on board a target vehicle. The translucent body may be either a lens of a camera including the imaging element or a windshield of the target vehicle. In acquiring the training data, the training data to which the annotations have been added may be acquired, the annotations including (c) specific information indicating that one of the lens and the windshield to which the adherent is adhering. In constructing the recognition model, the recognition model may be constructed by further learning the specific information of the adherent in the photographed image with use of the training data.

According to the foregoing aspect, a recognition model is constructed by learning further according to which of the two translucent bodies an adherent is adhering to. Since specific information indicating which of the two translucent bodies an adherent is adhering to has been further added, this recognition model is one constructed by learning which of the translucent bodies an adherent is adhering to. Accordingly, use of this recognition model makes it possible to more highly accurately detect a target adherent adhering to a translucent body.

Further, an adherent detecting apparatus according to an aspect of the present disclosure is an adherent detecting apparatus for, by means of at least one computer, detecting a target adherent adhering to a translucent body that separates an imaging element and a photographing target from each other, including: a photographed image acquirer that acquires a photographed image that is generated by photographing via the translucent body with the imaging element; and a detector that detects the presence or absence of the target adherent in the photographed image by acquiring information indicating the presence or absence of an adherent in the photographed image, the information being outputted by inputting the photographed image as input data into a recognition model for recognizing the presence or absence of an adherent to the translucent body in an image taken via the translucent body.

The foregoing aspect brings about effects similar to those of the foregoing adherent detecting method.

Further, an adherent learning apparatus according to an aspect of the present disclosure is an adherent learning apparatus for, by means of at least one computer, detecting a target adherent adhering to a translucent body that separates an imaging element and a photographing target from each other, including: an acquirer that acquires training data obtained by adding annotations to a photographed image that is generated by photographing via the translucent body, the annotations being information indicating the presence or absence of an adherent to the translucent body; and a learner that constructs a recognition model by learning the presence or absence of the adherent in the photographed image with use of the training data.

The foregoing aspect brings about effects similar to those of the foregoing adherent learning method.

Further, an adherent detecting system according to an aspect of the present disclosure is an adherent detecting system for, by means of at least one computer, detecting a target adherent adhering to a translucent body that separates an imaging element and a photographing target from each other, including: an acquirer that acquires training data to which annotations have been added, the annotations being information indicating the presence or absence of an adherent to the translucent body in a first photographed image taken via the translucent body; a learner that constructs a recognition model by learning type information of the adherent in the first photographed image with use of the training data; a photographed image acquirer that acquires a second photographed image that is generated by photographing via the translucent body with the imaging element; and a detector that detects the presence or absence of the target adherent in the second photographed image by acquiring information indicating the presence or absence of an adherent in the second photographed image, the information being outputted by inputting the second photographed image as input data into a recognition model for recognizing the presence or absence of an adherent to the translucent body in an image taken via the translucent body.

The foregoing aspect brings about effects similar to those of the foregoing adherent detecting system.

Further, a program according to an aspect of the present disclosure is a program for a computer to learn a target adherent adhering to a translucent body that separates an imaging element and a photographing target from each other, which causes the computer to acquire training data obtained by adding annotations to a photographed image that is generated by photographing via the translucent body, the annotations being information indicating the presence or absence of an adherent to the translucent body, and construct a recognition model by learning type information of the adherent in the photographed image with use of the training data.

The foregoing aspect brings about effects similar to those of the foregoing adherent learning method.

It should be noted that general or specific embodiments may be implemented as a system, a method, an integrated circuit, a computer program, a computer-readable storage medium such as a CD-ROM, or any selective combination thereof.

The following describes embodiments in concrete terms with reference to the drawings.

It should be noted that each of the embodiments to be described below shows a general or specific example. The numerical values, the shapes, the materials, the constituent elements, the placement location and connection configuration of the constituent elements, the steps, the order of the steps, and the like that are shown in the following embodiments are mere examples and are not intended to limit the present disclosure. Further, those of the constituent elements in the following embodiments which are not recited in an independent claim representing the most generic concept are described as optional constituent elements.

### Embodiment

The present embodiment describes an adherent detecting apparatus, an adherent detecting system, and the like that make it possible to more highly accurately detect an adherent shown in a photographed image.

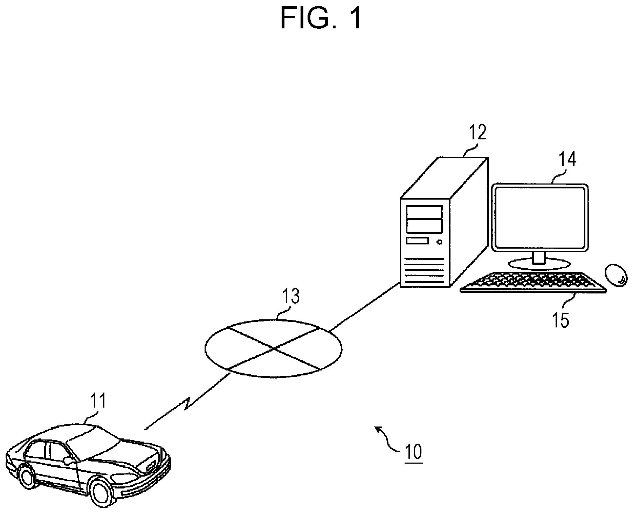

Fig. 1 is a block diagram showing a configuration of an adherent detecting system according to the present embodiment.

An adherent detecting system 10 according to the present embodiment is a system composed of at least one computer and detects an adherent (also referred to as "target adherent") adhering to a translucent body that separates an imaging element of a vehicle 11 and a photographing target from each other. It should be noted that the adherent detecting system 10 may detect an automobile, a pedestrian, a road, and the like as well as an adherent. A detecting target that the adherent detecting system 10 detects is sometimes also referred to as "physical object". It should be noted that although the following takes, as an example, a case where the imaging element is situated on board the vehicle 11, the imaging element is not limited to the one situated on board the vehicle 11 but may be a camera adapted to other uses (such as a surveillance camera or a security camera).

Specifically, the adherent detecting system 10 includes onboard equipment 110 and a server 12. The onboard equipment 110 is situated on board the vehicle 11. The server 12 is connected to the onboard equipment 110 via a communication network 13 such as the Internet. The translucent body is a translucent body that separates the imaging element of the camera of the onboard equipment 110 and a target of photographing by the imaging element from each other. Specifically, the translucent body is a lens of the camera or a windshield of the vehicle 11. It should be noted that the translucent body may be something else that is a member having translucency. Further, examples of adherents include drops of water, grains of snow, ice, dust, mud, insects, droppings. The onboard equipment 110 detects an adherent on the basis of recognition based on a recognition model. The recognition model that is used for the recognition is acquired from the server 12 via the communication network 13.

The server 12 is connected to a display device 14 and an input device 15 by means of cable communication or wireless communication. The display device 14 includes a liquid crystal display or an organic EL (electroluminescence) display and displays an image corresponding to control from the server 12. The input device 15 includes, for example, a keyboard and a mouse and outputs, to the server 12, an actuating signal corresponding to an input operation performed by a user.

Further, the server 12 acquires and stores images that are transmitted from a plurality of terminal apparatuses (not illustrated) via the communication network 13. Specifically, the terminal apparatuses transmit, to the server 12 via the communication network 13, images obtained by the taking of images with a camera situated on board, for example, the vehicle 11 or a vehicle other than the vehicle 11. Moreover, the server 12 uses, as training images, the images thus transmitted and constructs a recognition model by learning the types of adherents in the training images. Moreover, the server 12 transmits the recognition model thus constructed to the vehicle 11 via the communication network 13.

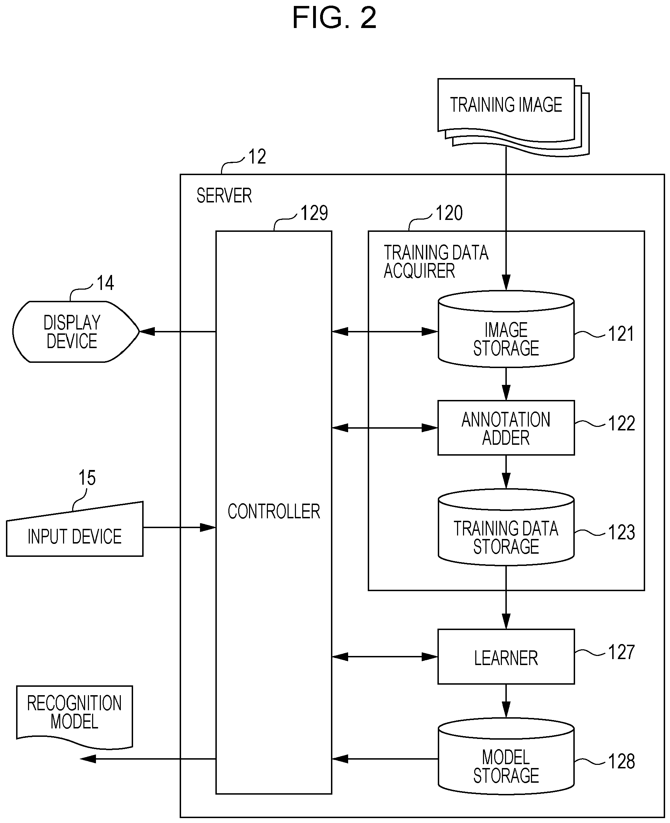

Fig. 2 is a block diagram showing a functional configuration of the server 12 according to the present embodiment.

As shown in Fig. 2, the server 12 includes a training data acquirer 120, a learner 127, a model storage 128, and a controller 129.

The training data acquirer 120 acquires training data that is used for learning of detection of an adherent. Specifically, the training data acquirer 120 acquires training data by adding, to an image in which an adherent is shown, annotations indicating the coordinates and type of the adherent.

The training data acquirer 120 includes an image storage 121, an annotation adder 122, and a training data storage 123.

The image storage 121 is a recording medium, such as a RAM (random access memory) or a hard disk, onto which to record data. In the image storage 121, a plurality of images generated by the taking of images with the camera are for example stored as a plurality of training images.

The annotation adder 122 adds annotations to a training image. The annotations include the coordinates and type information of an adherent. The coordinates of the adherent are the coordinates (X, Y) of the adherent in the training image, and are coordinates in a coordinate system assuming, for example, that the image has its upper left corner at (0, 0), that the rightward direction is an X-axis positive direction, and that the downward direction is a Y-axis positive direction. The type information is information indicating the type of the adherent and, specifically, is information indicating whether the adherent is a drop of water, a grain of snow, ice, dust, mud, an insect, or droppings. The annotation adder 122 acquires an actuating signal from the input device 15 via the controller 129 and adds annotations to a training image in accordance with the actuating signal.

The annotation adder 122 may either automatically add annotations to a training image on the basis of an image analysis technology or similar technology or add annotations to a training image in accordance with an operation performed by a user. That is, the annotation adder 122 may automatically determine the coordinates and type of an adherent in a training image by analyzing the training image. Alternatively, the annotation adder 122 may determine the coordinates and type of an adherent by displaying a training image through the display device 14 and acquiring an actuating signal inputted to the input device 15 by a user who has seen the training image. It should be noted that the following description takes, as an example, a case where the annotation adder 122 adds annotations on the basis of the inputting of an actuating signal by a user who has seen a training image.

The training data storage 123 is a recording medium, such as an RAM or a hard disk, onto which to record data. In the training data storage 123, a training image to which annotations have been added is stored as training data.

The learner 127 learns the type of an adherent with use of training data. That is, the learner 127 constructs a recognition model by learning the type of an adherent in a training image with use of training data stored in the training data storage 123. The learner 127 stores the recognition model thus constructed in the model storage 128.

Learning by the learner 127 is machine learning such as deep learning (neural network), random forests, or genetic programming. Further, graph cuts or the like may be used for the recognition and segmentation of objects in an image. Alternatively, a recognizer or the like created by random forests or genetic programming may be used. Further, the recognition model that the learner 127 constructs may be a neural network model.

The recognition model that the learner 127 constructs is a recognition model for recognizing an adherent in an image taken of the adherent and type information indicating the type of the adherent. More specifically, the recognition model is one constructed, for example, by acquiring training data obtained by adding annotations to an image taken of an adherent adhering to the translucent body, the annotations being information including (a) the coordinates of the adherent in the image and (b) type information indicating the type of the adherent, and learning the type information of an adherent in an image with use of the training data thus acquired.

The model storage 128 is a recording medium, such as a RAM or a hard disk, onto which to record data. In this model storage 128, a recognition model constructed by the learner 127 is stored. The recognition model stored in the model storage 128 is provided to the onboard equipment 110 via the controller 129.

The controller 129 acquires an actuating signal from the input device 15 and controls the training data acquirer 120, the learner 127, and the display device 14 in accordance with the actuating signal. Further, the controller 129 provides the recognition model stored in the model storage 128 to the onboard equipment 110.

The following describes in detail a process of generating training data by adding annotations to a training image acquired by the training data acquirer 120 and storing the training data in the training data storage 123.

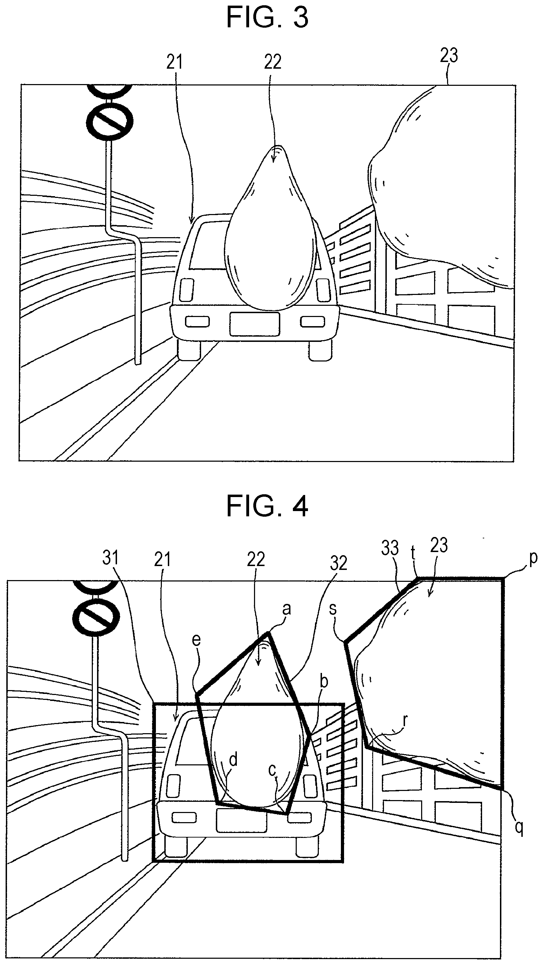

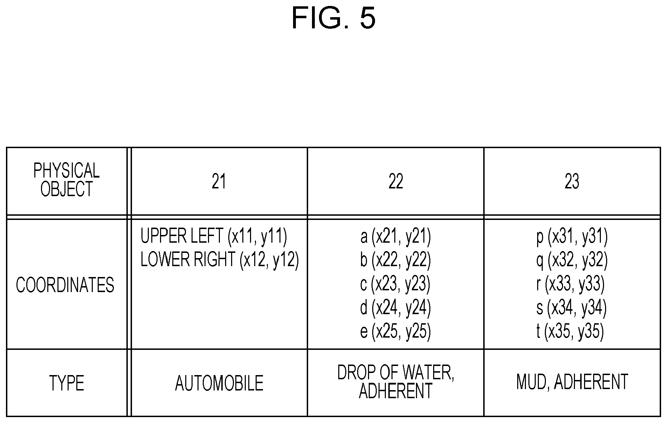

Fig. 3 is an explanatory diagram showing an example of an image that is stored in the image storage 121 according to the present embodiment. Fig. 4 is an explanatory diagram showing training data according to the present embodiment. Fig. 5 is an explanatory diagram showing annotations that are added by the annotation adder 122 according to the present embodiment.

The image shown in Fig. 3 is an example of an image (training image) taken of adherents. This image may be an image actually taken in advance in the past by the camera situated on board the vehicle 11, an image taken by a common camera, or an image generated by drawing using a computer, i.e. CG (computer graphics). As the camera that is situated on board the vehicle 11, a fish-eye lens may be employed for a wider angle of view. Although an image acquired by a camera including a fish-eye lens may have a distortion in a part of the image, a similar explanation holds even in the case of a distorted image.

The image shown in Fig. 3 is one taken of physical objects, namely an automobile 21, a drop of water 22, and mud 23. Of these physical objects, the drop of water 22 and the mud 23 are adherents.

The annotation adder 122 adds annotations to the training image shown in Fig. 3, which shows adherents. The addition of annotations to the training image shown in Fig. 3 is described with reference to Fig. 4.

The annotation adder 122 displays the image shown in Fig. 3 on the display device 14 through the controller 129 so that a user can see the image.

The user, who has seen the image shown in Fig. 3, recognizes the automobile 21, the drop of water 22, and the mud 23 as physical objects shown in the image.

The user sets, for each of the physical objects thus recognized, a frame that surrounds the physical object (see Fig. 4). For example, the user sets a frame 31 for the automobile 21, which is a physical object, via the input device 15. Similarly, the user sets frames 32 and 33 for the other physical objects, namely the drop of water 22 and the mud 23, respectively. It should be noted that although the shapes of the frame 31 and the other frames are not limited to particular shapes, rectangles or polygons have an advantage that the shape and position of the frame 31 can be defined by a comparatively small amount of information. For example, a rectangular frame can be defined by two sets of coordinates (two-dimensional coordinates) of the upper left and lower right vertices of the rectangle, and a polygonal frame can be defined by the coordinates of each of the plurality of vertices. Once the user sets the frames, the annotation adder 122 acquires, as the coordinates of the adherents in the image, coordinates corresponding to the frames that the user has set.

Further, for each of the physical objects thus recognized, the user sets the type of the physical object via the input device 15. For example, for the automobile 21, which is a physical object, the type of the physical body is set as "automobile". Further, for the drop of water 22, which is a physical object, the type of the physical object is set as "drop of water". Further, for the mud 23, which is a physical object, the type of the physical object is set as "mud". Further, the drop of water 22 and the mud 23, the type of each the physical objects is further set as "adherent", which indicates that the physical object is an adherent.

The annotation adder 122 receives through the controller 129 the settings configured by the user for the respective types of the physical objects. The respective coordinates and types of the physical objects that the annotation adder 122 receives are described with reference to Fig. 5.

Fig. 5 shows, for each of the physical objects, the coordinates of the physical object in the training image and the type of the physical object. For example, for the automobile 21, which is a physical object, Fig. 5 shows that the coordinates are the coordinates (x11, y11) of the upper left vertex of the frame and the coordinates (x12, y12) of the lower right vertex and that the type is "automobile".

The following conceptually describes a learning process that is performed by the learner 127.

The learner 127 learns the types and positions of the physical objects in the training image by machine learning such as deep learning from the training data, i.e. the training image, and the coordinates and positions of the physical objects. Although the following shows an example of a method of learning by machine learning, another method can be employed, as various methods of learning have been studied.

For example, the learner 127 learns the types of the physical objects according to images in the frames surrounding the physical objects in the training image and the types of the physical objects. At this point in time, for example, the features (such as colors, shapes, patterns, dimensions, and degrees of blurring) of the images of the physical objects included in the training image may be used.

For example, in a case where a physical object is a drop of water, such features may be used that the color of an inner part of the physical object is similar to the color of an area around the physical object and that the pattern of the inner part of the physical object is distorted in comparison with the pattern of the area around the physical object. In a case where a physical object is a grain of snow or mud, such features may be used that the physical object has a granular or patchy pattern of a color similar to white or brown. For other physical objects, features peculiar to those physical objects may be used. For example, in deep learning, an image feature amount such as a distortion in an image is automatically acquired by learning.

The following describes the onboard equipment 110, which performs adherent detection, and the vehicle 11 mounted with the onboard equipment 110.

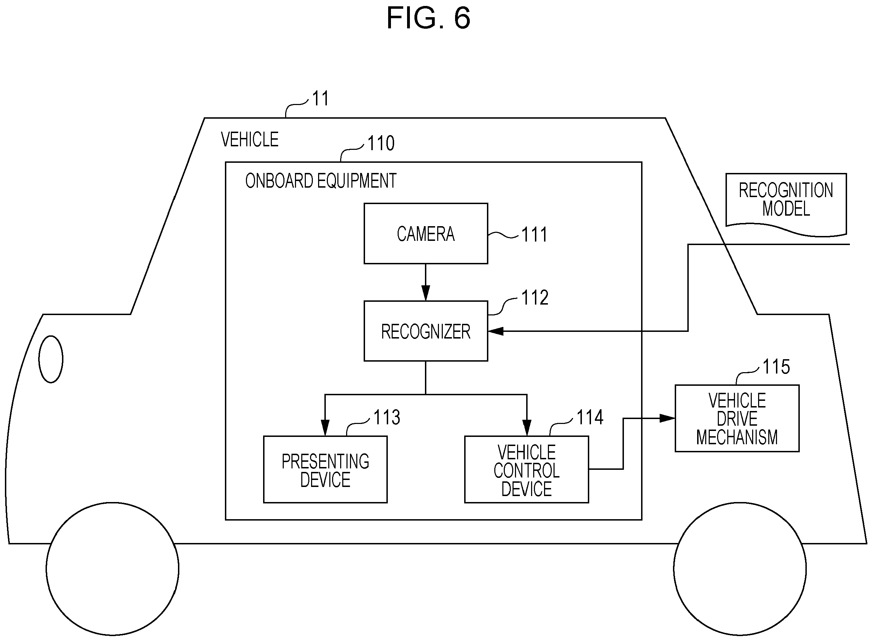

Fig. 6 is a block diagram showing a functional configuration of the vehicle 11.

The vehicle 11 includes the onboard equipment 110 and a vehicle drive mechanism 115.

The onboard equipment 110 includes a camera 111, a recognizer 112, and a presenting device 113, and a vehicle control device 114.

The camera 111 is situated on board the vehicle 11 so as to photograph the area around the vehicle 11. For example, the camera 111 is situated within a riding space of the vehicle 11 in such a position and orientation as to be able to photograph the area ahead of the vehicle 11. The camera 11 outputs, to the recognizer 112, a photographed image that is an image which is generated by photographing.

There are two translucent bodies, namely the lens of the camera 111 and the windshield, between the imaging element of the camera 111 and a photographing target. The imaging element photographs the area ahead of the vehicle 11 via these two translucent bodies. In other words, the imaging element photographs the area ahead of the vehicle 11 by means of light transmitted through these two translucent bodies.

An image that the camera 111 outputs may show adherents having adhered to the windshield, which is a translucent body, and the lens, which is a translucent body, of the camera 111.

The camera 111 may be situated outside the riding space of the vehicle 11. In that case, since the lens of the camera 111 is present between the imaging element of the camera 111 and a photographing target, the imaging element photographs the area ahead of the vehicle 11 by means of light transmitted through the lens, which is a translucent body. An image that the camera 111 outputs may show an adherent having adhered to the lens, which is a translucent body, of the camera 111.

The recognizer 112 acquires a recognition model from the server 12 via the communication network 13 and retains the recognition model. Note here that the recognition model that the recognizer 112 acquires is a recognition model for recognizing an adherent in an image taken of the adherent and type information indicating the type of the adherent. Further, the recognizer 112 acquires a photographed image that is an image which is generated by photographing the area ahead of the vehicle 11 with the camera 111 situated on board the vehicle 11. The recognizer 112 is equivalent to the detector.

Moreover, the recognizer 112 detects an adherent in the photographed image by inputting the photographed image as input data into the recognition model. Specifically, the recognizer 112 detects the type of an adherent (target adherent) in the photographed image by acquiring the type information of an adherent in the photographed image. Further, the recognizer 112 can also detect the dimensions of an adherent in the photographed image by acquiring the type information of the adherent in the photographed image. In this way, the recognizer 112 can more highly accurately detect the type or amount of an adherent.

Furthermore, the recognizer 112 outputs, to the presenting device 113 and the vehicle control device 114, output data representing the adherent thus identified. The output data includes, for example, a presentation image that is an image obtained by superimposing, onto the photographed image, a figure (such as a frame or an arrow) indicating the adherent thus identified.

The presenting device 113 is a presenting device that presents information, and includes, for example, a display device such as a liquid crystal display device or a sound output device such as a speaker. A description is given here by taking, as an example, a case where the presenting device 113 is a display device.

Upon acquiring the output data from the recognizer 112, the presenting device 113 displays the output data as an image. Specifically, the presenting device 113 displays the presentation image obtained by superimposing, onto the photographed image, the figure indicating the adherent thus identified. The presentation image presents a driver of the vehicle 11 with the position of a detected adherent in the photographed image taken by the camera 111.

The vehicle control device 114 is a control device that controls the drive of the vehicle 11 and the drive of equipment situated on board the vehicle 11. For example, upon acquiring output data from the recognizer 112, the vehicle control device 114 switches the drive of the vehicle 11 between automated driving and manual driving or controls the drive of a wiper that is a piece of equipment on the vehicle 11. Control of drive of the vehicle 11 is done by the vehicle drive mechanism 115.

The vehicle drive mechanism 115 is a control device that controls the drive of the vehicle 11. Under control of the vehicle control device 114, the vehicle drive mechanism 115 controls the drive or, specifically, acceleration and deceleration, steering, and the like of the vehicle 11.

The following describes a process that is executed by the adherent detecting system thus configured.

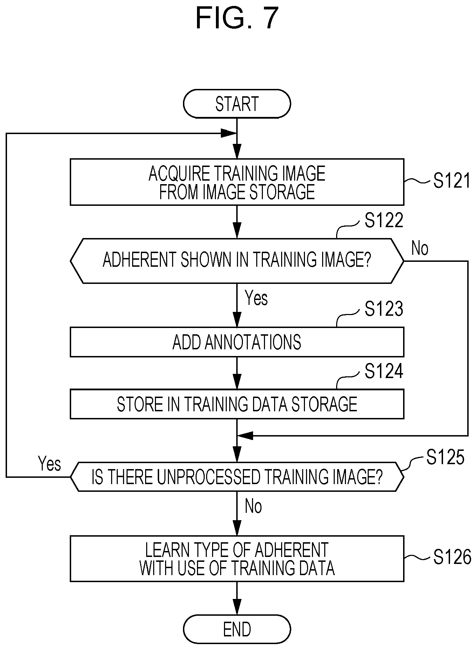

Fig. 7 is a flow chart showing a process pertaining to an adherent learning method that is performed by the server 12 according to the present embodi ment.

In step S121, the annotation adder 122 of the server 12 acquires a training image from the image storage 121.

In step S122, the annotation adder 122 determines, on the basis of an actuating signal or image processing, whether an adherent is shown in the training image acquired in step S121. If the annotation adder 122 has determined that an adherent is shown (Yes in step S122), the process proceeds to step S123, and if this is not the case (No in step S122), the process proceeds to step S125.

In step S123, the annotation adder 122 adds annotations to the training image acquired in step S121. The annotations include the coordinates and type information of the adherent in the training image.

In step S124, the annotation adder 122 stores the training image, to which the annotation adder 122 has added the annotations, as training data in the training data storage 123.

In step S125, the training data acquirer 120 determines whether the image storage 121 has a training image for which a determination has not been made as to whether an adherent is shown, i.e. an unprocessed training image. If it has been determined that there is an unprocessed training image (Yes in step S125), the unprocessed training image is subjected to the process starting from step S121. On the other hand, if it has been determined there is no unprocessed training image (No in step S125), the process proceeds to step S126.

In step S126, the learner 127 learns the type of the adherent in the training image with use of the training data stored in the training data storage 123. In this way, the learner 127 constructs a recognition model of the type of the adherent and stores the recognition model in the model storage 128.

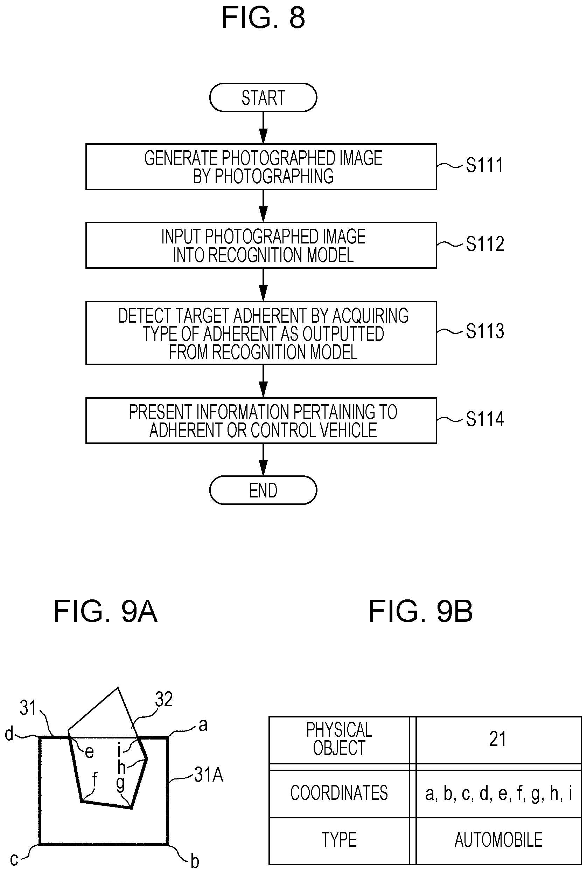

Fig. 8 is a flow chart showing a process pertaining to an adherent detecting method that is performed by the onboard equipment 110 according to the present embodiment.

In step S111, the camera 111 of the onboard equipment 110 generates a photographed image by photographing.

In step S112, the recognizer 112 inputs the photographed image, which the camera 111 generated in step S111, as input data into the recognition model.

In step S113, the recognizer 112 obtains information that is outputted by inputting the photographed image into the recognition model in step S112. The information that is outputted from the recognition model includes the type information of an adherent in the photographed image inputted into the recognition model in step S112. The recognizer 112 detects an adherent body in the photographed image by obtaining the information that is outputted from the recognition model.

In step S114, the onboard equipment 110 performs, on the basis of the type information of the adherent in the photographed image as obtained in step S113, the notification to the driver of information pertaining to the adherent by the presenting device 113 or the control of the vehicle 11 by the vehicle control device 114.

Specifically, the presenting device 113 controls notification to the driver on the basis of the type of the adherent. For example, the presenting device 113 generates image data representing the type of the adherent and presents an image on the basis of the image data thus generated. The presenting device 113 may generate audio data for notifying the user of the type information and outputs a sound on the basis of the audio data thus generated.

Further, the vehicle control device 114 switches the control of the vehicle 11 between automated driving or manual driving on the basis of the type of an adherent detected.

Further, the vehicle control device 114 controls the drive of the wiper of the vehicle 11 on the basis of the type of an adherent detected. In a case where the adherent is a drop of water, a grain of snow, or the like, the adherent can be wiped away by the wiper, but in a case where the adherent is mud, droppings, or the like, the adherent cannot be wiped away by the wiper and may spread. To address this problem, the vehicle control device 114 controls the drive of the wiper according to the type of an adherent detected. In this case, the vehicle control device 114 may retain viscosity for each adherent in advance. For example, in a case where the viscosity is expressed in either of two values "high" and "low", adherents such as mud, insects, and droppings are classified as being high in viscosity and adherents such as drops of water, grains of snow, and dust are classified as being low in viscosity. It should be noted that the foregoing is not intended to limit the number of classes into which the viscosity is classified or the mode of classification.

It should be noted that in addition to a recognition model generated by learning from all training images as described above, the learner 127 can also generate a recognition model generated with use of only some of all training images that have a particular feature. Moreover, in a case where a particular condition holds, the recognizer 112 may recognize an adherent with use of the recognition model generated with use of only some training images.

Specifically, the learner 127 may constructs a recognition model by learning from an adherent in a training image taken in rainy weather and type information indicating the type of the adherent (such a recognition model being also referred to as "rainy weather recognition model"). Since the rainy weather recognition model is one constructed from the training image taken in rainy weather, an adherent in an image taken by the camera 111 in rainy weather can be more accurately detected. Moreover, after the recognizer 112 has detected a drop of water as an adherent, the adherent may be detected with use of the rainy weather recognition model. This advantageously makes it possible to more accurately recognize an adherent in rainy weather.

As noted above, the adherent detecting system 10 allows an adherent adhering to the translucent body to be more highly accurately detected with use of a recognition model pertaining to the type of an adherent as generated by machine learning by the server 12.

It should be noted that the adherent detecting system 10 may be configured to detect the presence or absence of an adherent.

In this case, the training data acquirer 120 acquires training data by adding, to an image in which an adherent is shown, annotations indicating the presence or absence of the adherent. Further, the annotations that the annotation adder 122 adds to the training image include information indicating the presence or absence of the adherent. For example, the annotation adders 122 adds, to the training image shown in Fig. 3, annotations indicating the presence of adherents.

The recognition model that the recognizer 112 acquires is a recognition model for recognizing the presence or absence of an adherent in an image taken of the adherent. Moreover, the recognizer 122 detects the presence or absence of an adherent (target adherent) in a photographed image by acquiring information indicating the presence or absence of an adherent in the photographed image. Note here that the recognition model is one constructed by acquiring training data obtained by adding annotations to an image taken of an adherent adhering to the translucent body, the annotations being information indicating the presence or absence of the adherent in the image, and learning the presence or absence of the adherent in the image with use of the training data thus acquired.

This makes it possible to more highly accurately detect the presence or absence of a target adherent in a photographed image.

### Modification 1 of the Embodiment

In relation to an adherent detecting apparatus, an adherent detecting system, and the like that more highly accurately detect an adherent shown in a photographed image, Modification 1 further describes a technology that makes it possible to more correctly recognize a physical object even in a case where an adherent is adhering to the translucent body.

In the foregoing embodiment, the learner 127 constructs a recognition model on the basis of a training image to which the annotation adder 122 has added annotations indicating that an image inside the frame 31 in Fig. 4 includes the automobile 21. However, the image inside the frame 31 includes an image of the automobile 21 partially hidden by the drop of water 22 and is therefore not a complete image of the automobile 21. For that reason, the construction of a recognition model by the learner 127 with use of the image included in the frame 31 may result in a decline in accuracy of the recognition model with respect to an automobile.

To address this problem, Modification 1 describes a technology for curbing a decline in accuracy of a recognition model with respect to an automobile.

Figs. 9A and 9B are explanatory diagrams showing a first example of annotations that are added by the annotation adder 122 according to Modification 1. In order to curb a decline in accuracy of a recognition model with respect to an automobile, this method includes constructing a recognition model of an automobile with use of an image of a part of the automobile, i.e. an image of a part cut out so as to not include a drop of water.

Fig. 9A schematically shows the frames 31 and 32 shown in Fig. 4 and, in addition to these, shows a frame 31 A.

The annotations that the annotation adder 122 adds set a region obtained by excluding a region surrounded by the frame 32 from a region surrounded by the frame 31 and include, as the coordinates of a physical object, the vertices a to i of the frame 31A surrounding the region thus set (see Fig. 9B). The frame 31 A surrounds a region including an image of a part of the automobile 21 but not including or hardly including the drop of water 22. The settings for the frame 31A can be configured by calculation from the positions of the frames 31 and 32 or can be acquired on the basis of an actuating signal that is acquired from the input device 15 via the controller 129 after the user has seen the image shown in Fig. 3.

Since the region surrounded by the frame 31A does not include or hardly includes the drop of water 22, a decline in accuracy of a recognition model with respect to an automobile can be curbed.

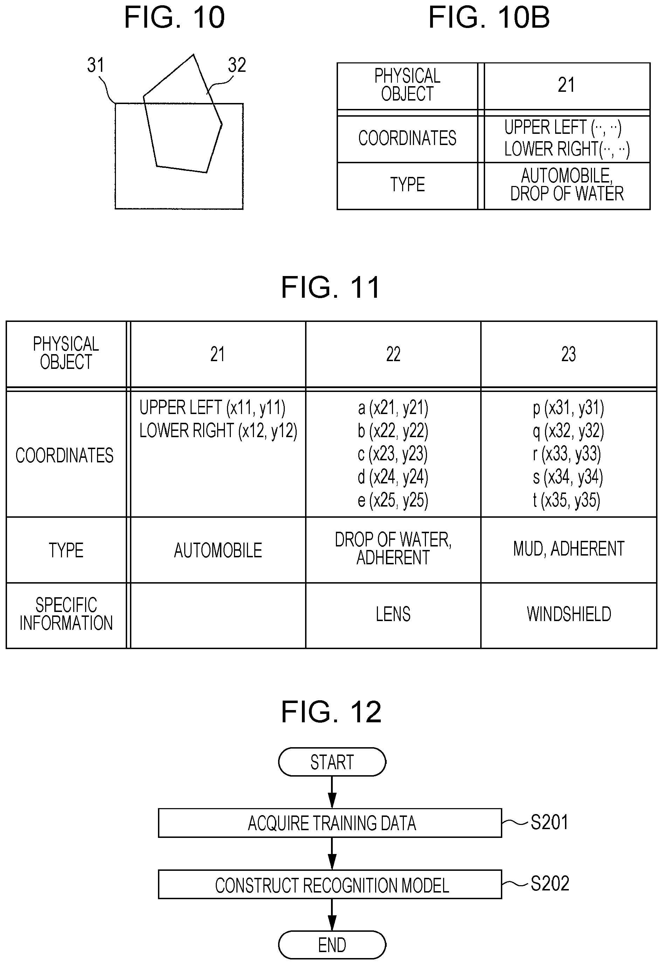

Figs. 10A and 10B are explanatory diagrams showing a second example of annotations that are added by the annotation adder 122 according to Modification 1. In order to curb a decline in accuracy of a recognition model with respect to an automobile, this method includes constructing a recognition model for recognizing a region including an automobile and a drop of water, for example, as a new physical object "automobile + drop of water".

Fig. 10A schematically shows the frames 31 and 32 shown in Fig. 4.

The annotations that the annotation adder 122 adds include the vertices of the frame 31 as the coordinates of the physical object. Further, the annotations include "automobile + drop of water" as type information (see Fig. 10B). The settings for this type information can be synthesized from the type information "automobile" of the automobile 21 and the type information "drop of water" of the drop of water 22 or can be acquired on the basis of an actuating signal that is acquired from the input device 15 via the controller 129.

Since the frame 31 is recognized as the physical object "automobile + drop of water", which is different from the "automobile", a decline in accuracy of a recognition model with respect to an automobile can be curbed.

### Modification 2 of the Embodiment

In relation to an adherent detecting apparatus, an adherent detecting system, and the like that more highly accurately detect an adherent shown in a photographed image, Modification 2 further describes an adherent detecting apparatus, an adherent detecting system, and the like that, in a case where there are a plurality of translucent bodies, detects which of the plurality of translucent bodies an adherent is adhering to.

Modification 2 limits a description to a case where the camera 111 is installed within the riding space of the vehicle 11. In this case, there are two translucent bodies, namely the lens of the camera 111 and the windshield of the vehicle 11, between the imaging element of the camera 111 and a photographing target. The imaging element photographs the area ahead of the vehicle 11 by means of light transmitted through these two translucent bodies. Assume that the drop of water is adhering to the lens and the mud 23 is adhering to the windshield.

The adherent detecting system 10 according to Modification 2 detects an adherent in the same manner as the adherent detecting apparatus according to the embodiment and further detects which of the plurality of translucent bodies the adherent is adhering to. The adherent detecting system 10 according to Modification 2 differs from the adherent detecting system 10 according to the embodiment in terms of the annotation adder 122 and a recognition model.

The annotation adder 122 adds annotations to a training image. The annotations include specific information in addition to the coordinates and type information of an adherent. The specific information is information that indicates that one of the lens of the camera 111 and the windshield of the vehicle 11 to which the adherent is adhering, i.e. information that specifies whether the adherent is adhering to the lens of the camera 111 or adhering to the windshield of the vehicle 11. The annotation adder 122 acquires an actuating signal from the input device 15 via the controller 129 and adds annotations including specific information to an training image in accordance with the actuating signal.

Fig. 11 is an explanatory diagram showing annotations that are added by the annotation adder 122 according to Modification 2. It should be noted that, of the pieces of information shown in Fig. 11, the coordinates and the types are not described, as they are identical to those shown in Fig. 5.

As shown in Fig. 11, the specific information of the drop of water 22 is "lens" and the specific information of the mud 23 is "windshield".

The learner 127 constructs a recognition model by further learning the specific information of the adherent in an image with use of training data. That is, the recognition model that the learner 127 generates is one constructed by further learning the specific information of the adherent in an image with use of training data.

Moreover, the recognizer 112 acquires specific information of an adherent in a photographed image as outputted by inputting the photographed image as input data into the recognition model and thereby detects which of the lens and the windshield the adherent in the photographed image is adhering to.

As noted above, according to the adherent detecting method according to the present embodiment, the presence or absence of a target adherent in a photographed image is detected on the basis of a recognition model. Since this recognition model allows recognition of an adherent in an image in which the adherent is shown to be adhering to a translucent body, inputting the photographed image into this recognition model makes it possible to more highly accurately detect the presence or absence of a target adherent in the photographed image. Thus, this adherent detecting method makes it possible to more highly accurately detect an adherent in a photographed image that is adhering to a translucent body.

Further, a recognition model constructed with use of training data to which annotations have been added, i.e. a recognition model constructed by learning the presence or absence of an adherent in an image in which the adherent is shown, is used. That is, the presence or absence of the adherent shown in the image is taught into the recognition model. For example, the type of an adherent is learned on the basis of the features, such as color, shape, or pattern, of the adherent shown in an image. Therefore, by inputting a photographed image into the recognition model, the presence or absence of an adherent in the photographed image thus inputted is appropriately detected. This may contribute to more highly accurate detection of a target adherent.

Further, a recognition model constructed by further learning the type and position of an adherent in an image in which the adherent is shown is used. That is, the position and type of the adherent shown in the image is further taught into the recognition model. Therefore, by inputting a photographed image into the recognition model, the type of an adherent in the photographed image thus inputted is appropriately detected. This may contribute to more highly accurate detection of a target adherent.

Further, the amount of a target adherent can be more highly accurately detected.

Further, a target adherent in a photographed image is detected on the basis of a recognition model constructed by learning further according to which of the two translucent bodies an adherent is adhering to. Since specific information indicating which of the two translucent bodies an adherent is adhering to has been further added, this recognition model is one constructed by learning which of the translucent bodies an adherent is adhering to. That is, in addition to the type of an adherent shown in an image, which of the translucent bodies the adherent is adhering to is taught into the recognition model. Therefore, by inputting a photographed image into the recognition model, the type of an adherent in the photographed image thus inputted and the translucent body to which the adherent is adhering are appropriately detected. This may contribute to more highly accurate detection of a target adherent.

Further, more specifically, a drop of water, a grain of snow, ice, dust, mud, an insect, and droppings are detected as target adherents adhering to a translucent body.

Further, the driver is notified according to the type of an adherent detected. When notified, the driver can take an action according to the type of the adherent. For example, when the adherent is a drop of water or a grain of snow, the driver can turn on the wiper, and when the adherent is mud or an insect, the drive can respond, for example, by pulling over and wiping away the adherent with cloth.

Further, the vehicle is controlled according to the type of an adherent detected. According to the type of the adherent, it becomes possible to exercise the control, for example, of canceling automated driving and switching to manual driving in a case where it is impossible to continue automated driving or a safety hazard occurs.

Further, the wiper is controlled according to the type of an adherent detected. For example, the control of turning on the wiper becomes possible only in a case where the adherent is a drop of water or a grain of snow.

Further, there is an advantage that an adherent is more accurately recognized in rainy weather. Since the rainy weather recognition model is one constructed from a training image taken in rainy weather, an adherent in an image taken by the camera in rainy weather can be more highly accurately detected.

Further, more specifically, an adherent adhering to a translucent body can be more highly accurately detected by using a neural network model as a recognition model.

### Other Modifications

Some or all of the adherent detecting system and the like according to each of the foregoing embodiments are described in the following way but are not limited to the following description.

Fig. 12 is a flow chart showing an adherent learning method according to a modification of each of the embodiments.

As shown in Fig. 12, the adherent learning method according to a modification of each of the embodiments is an adherent learning method for, by means of at least one computer, detecting a target adherent adhering to a translucent body that separates an imaging element and a photographing target from each other, including: acquiring training data obtained by adding annotations to a photographed image that is generated by photographing via the translucent body, the annotations being information indicating the presence or absence of an adherent to the translucent body (step S201); and constructing a recognition model by learning the presence or absence of the adherent in the photographed image with use of the training data (step S202).

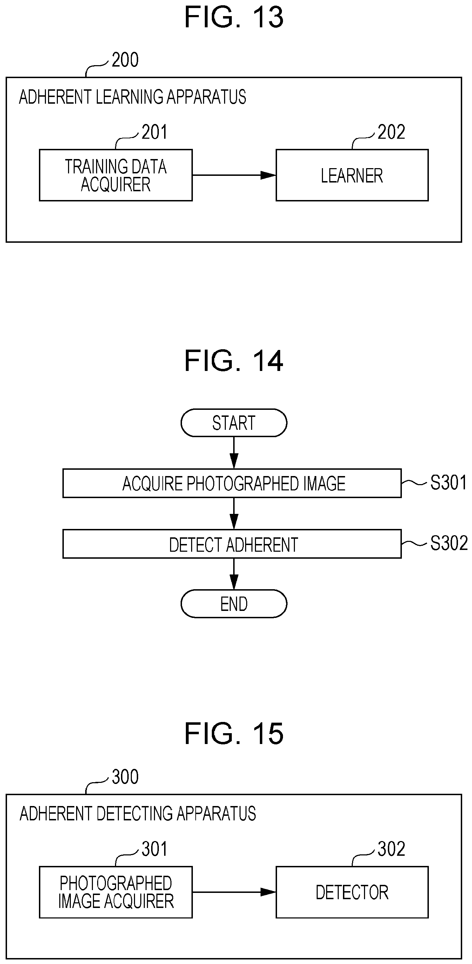

Fig. 13 is a block diagram showing an adherent learning apparatus 200 according to a modification of each of the embodiments.

As shown in Fig. 13, the adherent learning apparatus 200 according to a modification of each of the embodiments is an adherent learning apparatus 200 for, by means of at least one computer, detecting a target adherent adhering to a translucent body that separates an imaging element and a photographing target from each other, including: a training data acquirer 201 that acquires training data obtained by adding annotations to a photographed image that is generated by photographing via the translucent body, the annotations being information indicating the presence or absence of an adherent to the translucent body; and a learner 202 that constructs a recognition model by learning the presence or absence of the adherent in the photographed image with use of the training data.

Fig. 14 is a flow chart showing an adherent detecting method according to a modification of each of the embodiments.

As shown in Fig. 14, the adherent detecting method according to a modification of each of the embodiments is an adherent detecting method for, by means of at least one computer, detecting a target adherent adhering to a translucent body that separates an imaging element and a photographing target from each other, including: acquiring a photographed image that is generated by photographing via the translucent body with the imaging element (step S301); and detecting the presence or absence of the target adherent in the photographed image by acquiring information indicating the presence or absence of an adherent in the photographed image, the information being outputted by inputting the photographed image as input data into a recognition model for recognizing the presence or absence of an adherent to the translucent body in an image taken via the translucent body (step S302).

Fig. 15 is a block diagram showing an adherent detecting apparatus 300 according to a modification of each of the embodiments.

As shown in Fig. 15, the adherent detecting apparatus 300 according to a modification of each of the embodiments is an adherent detecting apparatus 300 for, by means of at least one computer, detecting a target adherent adhering to a translucent body that separates an imaging element and a photographing target from each other, including: a photographed image acquirer 301 that acquires a photographed image that is generated by photographing via the translucent body with the imaging element; and a detector 302 that detects the presence or absence of the target adherent in the photographed image by acquiring information indicating the presence or absence of an adherent in the photographed image, the information being outputted by inputting the photographed image as input data into a recognition model for recognizing the presence or absence of an adherent to the translucent body in an image taken via the translucent body.

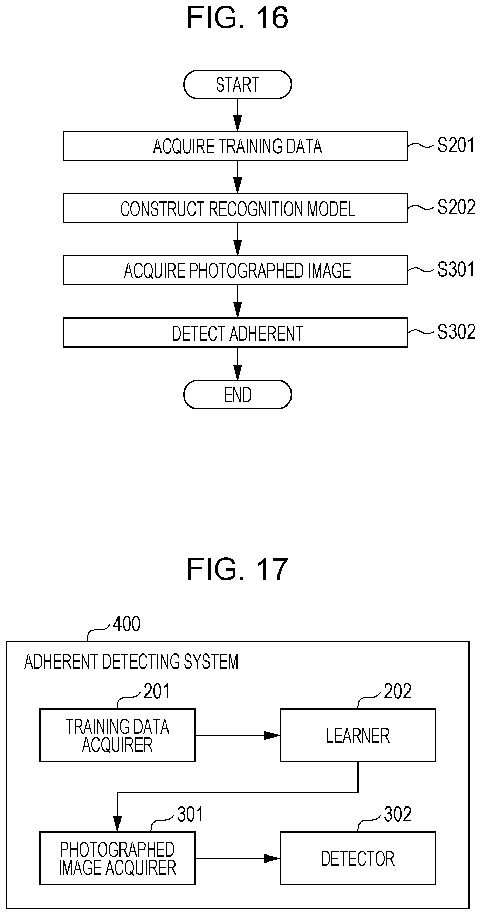

Fig. 16 is a flow chart showing an adherent detecting method according to a modification of each of the embodiments.

As shown in Fig. 16, the adherent detecting method according to a modification of each of the embodiments is an adherent detecting method for, by means of at least one computer, detecting a target adherent adhering to a translucent body that separates an imaging element and a photographing target from each other, including: acquiring training data obtained by adding annotations to a photographed image that is generated by photographing via the translucent body, the annotations being information indicating the presence or absence of an adherent to the translucent body (step S201); constructing a recognition model by learning the presence or absence of the adherent in the photographed image with use of the training data (step S202); acquiring a photographed image that is generated by photographing via the translucent body with the imaging element (step S301); and detecting the presence or absence of the target adherent in the photographed image by acquiring information indicating the presence or absence of an adherent in the photographed image, the information being outputted by inputting the photographed image as input data into a recognition model for recognizing the presence or absence of an adherent to the translucent body in an image taken via the translucent body (step S302).

Fig. 17 is a block diagram showing an adherent detecting system 400 according to a modification of each of the embodiments.

As shown in Fig. 17, the adherent detecting system 400 according to a modification of each of the embodiments is an adherent detecting system 400 for, by means of at least one computer, detecting a target adherent adhering to a translucent body that separates an imaging element and a photographing target from each other, including: a training data acquirer 201 that acquires training data to which annotations have been added, the annotations being information indicating the presence or absence of an adherent to the translucent body in a first photographed image taken via the translucent body; a learner 202 that constructs a recognition model by learning type information of the adherent in the first photographed image with use of the training data; a photographed image acquirer 301 that acquires a second photographed image that is generated by photographing via the translucent body with the imaging element; and a detector 302 that detects the presence or absence of the target adherent in the second photographed image by acquiring information indicating the presence or absence of an adherent in the second photographed image, the information being outputted by inputting the second photographed image as input data into a recognition model for recognizing the presence or absence of an adherent to the translucent body in an image taken via the translucent body.

It should be noted that, in each of the embodiments, each constituted element may be configured by dedicated hardware or realized by executing a software program suited to that constituted element. Each constituent element may be realized by a program executor such as a CPU or a processor reading out a software program stored on a recording medium such as a hard disk or a semiconductor memory. Note here that a software that realizes the adherent learning apparatus, the adherent detecting apparatus, and the like according to each of the embodiments is the following program.

That is, this program causes a computer to execute an adherent detecting method for, by means of at least one computer, detecting a target adherent adhering to a translucent body that separates an imaging element and a photographing target from each other, including: acquiring a photographed image that is generated by photographing via the translucent body with the imaging element; and detecting the presence or absence of the target adherent in the photographed image by acquiring information indicating the presence or absence of an adherent in the photographed image, the information being outputted by inputting the photographed image as input data into a recognition model for recognizing the presence or absence of an adherent to the translucent body in an image taken via the translucent body.

Further, this program causes a computer to execute an adherent learning method for, by means of at least one computer, detecting a target adherent adhering to a translucent body that separates an imaging element and a photographing target from each other, including: acquiring training data obtained by adding annotations to a photographed image that is generated by photographing via the translucent body, the annotations being information indicating the presence or absence of an adherent to the translucent body; and constructing a recognition model by learning the presence or absence of the adherent in the photographed image with use of the training data thus acquired.

Although the foregoing has described an adherent detecting method and the like according to one more aspects with reference to embodiments, the present disclosure is not limited to these embodiments. Embodiments based on the application to the present embodiment of various modifications conceived of by persons skilled in the art and embodiments based on combinations of constituent elements of different embodiments are encompassed in the scope of the one or more aspects, provided such embodiments do not depart from the spirit of the present disclosure.

The present disclosure is applicable to an adherent detecting method that makes it possible to more highly accurately detect an adherent shown in a photographed image. More specifically, the present disclosure is applicable to a control device or similar device that is situated on board a self-guided vehicle.

## Claims

1. A computer implemented detecting method for detecting a target adherent adhering to a translucent body that separates an imaging sensor and an imaging target from each other, comprising:
acquiring an image that is generated by capturing via the translucent body using the image sensor;
inputting the image as input data into a recognition model for recognizing presence or absence of an adherent to the translucent body in an recognition image captured via the translucent body;
acquiring adherent information outputted from the recognition model and indicating presence or absence of an adherent in the image; and
detecting presence or absence of the target adherent in the image using the adherent information.

2. The computer implemented detecting method according to Claim 1,
wherein the recognition model is constructed by learning the presence or absence of the adherent in the image using training data obtained by adding annotation including the adherent information to the image.

3. The computer implemented detecting method according to Claim 2,
wherein the annotation further includes (a) coordinates of the adherent in the image and (b) type information indicating a type of the adherent,
the recognition model is constructed by further learning the type information of the adherent in the image using the training data, and
the detecting includes further detecting a type of the target adherent in the image by acquiring the type information of the adherent in the image as outputted by inputting the image as input data into the recognition model.

4. The computer implemented detecting method according to Claim 1,
wherein the detecting includes detecting dimensions of the target adherent in the image by acquiring dimensions of an adherent in the image as outputted by inputting the image into the recognition model.

5. The computer implemented detecting method according to Claim 2,
wherein the image sensor is on board a target vehicle,
the translucent body includes two translucent bodies that are a lens of a camera including the image sensor and a windshield of the target vehicle,
the annotations further includes (c) specific information indicating that one of the lens and the windshield to which the adherent is adhering,
the recognition model is constructed by further learning the specific information of the adherent in the image, and
the detecting includes detecting, by acquiring specific information of an adherent in the image as outputted by inputting the image as input data into the recognition model, which of the lens and the windshield the target adherent in the image is adhering to.

6. The computer implemented detecting method according to Claim 3,
wherein the type information included in the annotation is information indicating a drop of water, a grain of snow, ice, dust, mud, an insect, or droppings.

7. The computer implemented detecting method according to Claim 1,
wherein the image sensor is on board a target vehicle,
the computer implemented detecting method further comprising controlling notification to a driver of the target vehicle according to a type of the detected target adherent.

8. The computer implemented detecting method according to Claim 1,
wherein the image sensor is on board a target vehicle,
the computer implemented detecting method further comprising switching, according to a type of the detected target adherent, between controlling the target vehicle by automated driving and controlling the target vehicle by manual driving.

9. The computer implemented detecting method according to Claim 1,
wherein the image sensor is on board a target vehicle,
the computer implemented detecting method further comprising controlling drive of a wiper of the target vehicle according to a type of the detected target adherent.

10. The computer implemented detecting method according to Claim 1,
wherein the recognition model includes a rainy weather recognition model for recognizing the adherent in the image captured in rainy weather and type information indicating a type of the adherent in the image captured in rainy weather, and
after a drop of water has been detected as the target adherent, the target adherent is detected using the rainy weather recognition model as the recognition model.

11. The computer implemented detecting method according to Claim 1,
wherein the recognition model is a neural network model.

12. A computer implemented learning method for detecting a target adherent adhering to a translucent body that separates an image sensor and an imaging target from each other, comprising:
acquiring training data obtained by adding annotation to an image that is generated by capturing via the translucent body, the annotation including adherent information indicating presence or absence of an adherent to the translucent body; and
constructing a recognition model by learning presence or absence of the adherent in the image using the training data.

13. The computer implemented learning method according to Claim 12,
wherein the constructing the recognition model includes constructing the recognition model by learning type information of the adherent in the image using the training data obtained by adding, to the image captured via the translucent body, the annotation further including (a) coordinates of the adherent in the image and (b) the type information indicating a type of the adherent.

14. The computer implemented learning method according to Claim 12,
wherein the image sensor is on board a target vehicle,
the translucent body is either a lens of a camera including the image sensor or a windshield of the target vehicle,
the annotation further includes (c) specific information indicating that one of the lens and the windshield to which the adherent is adhering, and
the constructing the recognition model includes constructing the recognition model by further learning the specific information of the adherent in the image using the training data.

15. A detecting apparatus for detecting a target adherent adhering to a translucent body that separates an image sensor and an imaging target from each other, comprising:
a processor; and
a memory storing thereon a computer program, which when executed by the processor, causes the processor to perform operations including:
acquiring an image that is generated by capturing via the translucent body with the image sensor;
inputting the image as input data into a recognition model for recognizing presence or absence of an adherent to the translucent body in a recognition image captured via the translucent body;
acquiring adherent information outputted from the recognition model and indicating presence or absence of an adherent in the image; and
detecting presence or absence of the target adherent in the image using the adherent information.

16. A learning apparatus for detecting a target adherent adhering to a translucent body that separates an image sensor and an imaging target from each other, comprising:
a processor; and
a memory storing thereon a computer program, which when executed by the processor, causes the processor to perform operations including:
acquiring training data obtained by adding annotations to an image that is generated by capturing via the translucent body, the annotation including adherent information indicating presence or absence of an adherent to the translucent body; and
constructing a recognition model by learning presence or absence of the adherent in the image using the training data.

17. A detecting system for detecting a target adherent adhering to a translucent body that separates an image sensor and an imaging target from each other, comprising:
a processor; and
a memory storing thereon a computer program, which when executed by the processor, causes the processor to perform operations including:
acquiring training data to which annotation have been added, the annotation including adherent information indicating presence or absence of an adherent to the translucent body in a first image captured via the translucent body;
constructing a recognition model by learning type information of the adherent in the first image using the training data;
acquiring a second image that is generated by capturing via the translucent body with the image sensor;
inputting the second image as input data into a recognition model for recognizing presence or absence of an adherent to the translucent body in a recognition image captured via the translucent body;
acquiring adherent information outputted from the recognition model and indicating presence or absence of an adherent in the second image; and
detecting presence or absence of the target adherent in the second image using the adherent information.

18. A non-transitory recording medium storing thereon a computer program for detecting a target adherent adhering to a translucent body that separates an image sensor and an imaging target from each other, which when executed by the processor, causes the processor to perform operations including:
acquiring training data obtained by adding annotation to an image that is generated by capturing via the translucent body, the annotation including adherent information indicating presence or absence of an adherent to the translucent body; and
constructing a recognition model by learning type information of the adherent in the image using the training data.
